Europäisches Patentamt

(19) European Patent Office

Office européen des brevets

(11) Numéro de publication: **0 028 956**

**A1**

(12) # DEMANDE DE BREVET EUROPEEN

(21) Numéro de dépôt: **80401506.3**

(22) Date de dépôt: **23.10.80**

(51) Int. Cl.³: **B 29 D 27/00**

(30) Priorité: **12.11.79 FR 7927793**

(43) Date de publication de la demande:
**20.05.81 Bulletin 81/20**

(84) Etats Contractants Désignés:
**BE DE FR GB IT LU NL**

(71) Demandeur: **RHONE-POULENC INDUSTRIES**
**22, avenue Montaigne**
**F-75008 Paris(FR)**

(72) Inventeur: **Auge, Jacques**
**8, rue Saint-Nestor**
**F-69008 Lyon(FR)**

(72) Inventeur: **Robinet, Bernard**
**17, Montée Du Vernay**
**F-69300 Caluire(FR)**

(72) Inventeur: **Mary, Yves**
**Les Terrasses Armes**
**F-58500 Clamecy(FR)**

(74) Mandataire: **Rochet, Michel et al,**
**RHONE-POULENC Service Brevets Chimie et Polymères**
**Boîte Postale 753**
**F-75360 Paris Cedex 08(FR)**

(54) Fabrication en continu de plaques en mousse phénolique.

(57) L'invention concerne un procédé de fabrication en continu de plaques en mousse phénolique.

Selon ce procédé, on utilise une composition comprenant un polycondensat aldéhyde-phénol du type résol, un agent d'expansion et un durcisseur acide et provoque l'expansion à l'intérieur d'une gaine étanche.

Les plaques fabriquées conformément à ce procédé peuvent être utilisées dans l'industrie du batiment, l'industrie du froid, l'isolation thermique ou acoustique.

EP 0 028 956 A1

1

## FABRICATION EN CONTINU DE PLAQUES
## EN MOUSSE PHENOLIQUE

La présente invention a pour objet un procédé de fabrication en continu de plaques ou panneaux en mousse phénolique.

L'aptitude des résines phénoliques, plus précisément des résines aldéhyde/phénol du type résol, à donner des matériaux multicellulaires (appelés ci-après mousses) est connue depuis fort longtemps. Diverses formulations ont été décrites, de même que des techniques de fabrication de ces mousses et notamment des procédés de fabrication en continu de plaques constituées par ces mousses. A titre d'information, on mentionnera notamment les brevets français suivants : 1.529.602, 1.599.874, 2.128.424, 2.234.336, 2.350.945.

Le brevet français 1.529.602 décrit une machine destinée à la fabrication en continu de panneaux en matériau expansé de faible densité, notamment en résine phénolique, ladite machine comprenant notamment un couloir vertical, délimité par des parois mobiles, par exemple par quatre rubans métalliques sans fin, la composition expansible étant introduite par l'extrémité supérieure de ce couloir, le panneau étant entraîné sur un transporteur horizontal disposé à l'extrémité inférieure dudit couloir.

Selon le brevet français 1.599.874, on distribue de façon régulière la résine avec adjuvants sur un tapis, laisse la résine s'expanser librement puis contient la résine entre ce tapis et un tapis supérieur, sèche la bande obtenue, le produit défini dans ce brevet étant notamment caractérisé par le fait que, pendant la formation de la bande, ses deux surfaces sont portées à une température telle que l'on obtienne sur ces deux faces une pellicule résistante.

Le brevet français 2.128.424 décrit un procédé selon lequel on introduit en premier lieu la résine phénolique maintenue à basse température (8 à 15°C), ajoute l'agent porogène se trouvant sous haute pression, introduit dans ce prémélange les adjuvants et le durcisseur, dépose l'ensemble en va et vient sur une couche de revêtement inférieure pénétrant dans une presse à double bande, le répartit régulièrement, le recouvre d'une autre couche de revêtement supérieure et fait expanser le mélange en continu dans la presse à double bande chauffée et durcir sous une pression d'expansion comprise de préférence entre 0,1 et 0,3 atmosphère effective.

Le brevet français 2.234.336 décrit un procédé consistant à mélanger une résine phénolaldéhyde liquide, contenant 12 à 15 % d'eau, un catalyseur acide, un agent porogène hydrocarboné et de l'anhydride borique, à déposer ce mélange sur une feuille support, à déplacer la feuille support, sur laquelle se produit le moussage, vers des éléments limitant l'épaisseur de la mousse, éléments maintenus à une température suffisamment supérieure à la température ambiante pour que la mousse de résine en contact avec eux soit maintenue aux environs de 100°C.

Le brevet français 2.350.945 décrit un procédé comportant un passage à l'air libre du mélange expansible, préalablement réparti uniformément, ce mélange étant chauffé pour en provoquer l'expansion, la masse complètement expansée et partiellement durcie étant conformée en exerçant une pression sur sa face libre, le durcissement étant complété en maintenant la pression et le chauffage.

La multiplicité des références ayant pour objet la fabrication en continu de panneaux ou plaques en mousses phénoliques montre, à l'évidence, que l'opération en continu ne saurait être résumée en une alimentation en continu des réactifs utilisables pour provoquer l'expansion d'une résine formo-phénolique. La technique du continu fait intervenir de nombreux facteurs, et notamment le processus d'expansion lui-même et les qualités que l'on cherche à obtenir, par exemple la densité de la mousse, ses propriétés mécaniques, la répartition de la structure cellulaire, c'est-à-dire l'existence d'un gradient de densité ou, au contraire, une répartition uniforme de la structure cellulaire, l'existence ou non de zones renforcées... Cette spécificité des problèmes liés à la fabrication de panneaux en mousses phénoliques et des solutions apportées à ces problèmes est confirmée par le fait que les références citées précédemment concernent de manière très restrictive des mousses phénoliques, voire des mousses obtenues à partir de formulations très précises.

L'invention se propose de fournir une technique de fabrication en continu de panneaux en mousse phénolique, technique, permettant en premier lieu d'obtenir des panneaux à structure cellulaire uniformément répartie sur toute la surface d'une section du panneau (section perpendiculaire à la direction du panneau au cours de sa fabrication).

Un autre objet de l'invention est de fabriquer des panneaux de mousse dont la densité puisse atteindre des valeurs très faibles, tout en présentant des propriétés mécaniques intéressantes.

L'invention propose également une technique permettant d'obtenir des panneaux munis temporairement ou définitivement de parements pouvant être choisis dans une large gamme de produits.

Ces divers buts de l'invention et d'autres avantages qui apparaîtront à la lecture de ce qui suit sont obtenus en mettant en oeuvre un procédé comprenant les opérations suivantes :

a) Coulée sur une feuille support $(f_1)$ à partir d'un ou plusieurs organes distributeurs, d'un mélange comprenant un polycondensat aldéhyde-phénol du type résol, un agent d'expansion et un durcisseur acide.

b) Application immédiate sur ledit liquide d'une seconde feuille $(f_2)$, de manière à provoquer l'étalement uniforme du liquide sur une épaisseur prédéterminée.

c) Simultanément à l'opération décrite sous b), assemblage des bords des feuilles $f_1$ et $f_2$ de manière à former une gaine étanche.

d) Entraînement de l'ensemble à travers un dispositif conformateur, dans des conditions permettant l'expansion du liquide et le durcissement de la mousse.

On utilise présentement le terme feuille pour des raisons de simplification, étant admis que les matériaux $f_1$ et $f_2$ peuvent être de nature très variée, ainsi qu'il sera précisé plus loin.

On donne ci-après en premier lieu des indications relatives aux constituants du liquide expansible mentionné sous a), les opérations a), b), c) et d) étant ensuite explicitées.

Les polycondensats aldéhyde/phénol sont largement décrits dans la littérature. Ces produits sont généralement obtenus par chauffage d'un monophénol tel que crésol, xylénol, p.tert.butylphénol ou p.phénylphénol et, de préférence, le phénol lui-même avec un aldéhyde, de préférence le formaldéhyde, éventuellement associé à de l'acétaldéhyde ou du furfuraldéhyde, dans un rapport molaire phénol/aldéhyde compris entre 1/1,2 et 1/3. Cette réaction est effectuée en présence d'un catalyseur alcalin tel que l'hydroxyde de sodium, l'hydroxyde de baryum, l'ammoniac ou une amine. Cette réaction s'effectue habituellement à une température pouvant aller de 50 à 100°C ; la durée de la réaction est fonction de l'état d'avancement ou de condensation souhaité pour la résine. En général, cette première phase dure de 1 à 5 heures. Le produit est ensuite neutralisé par un acide minéral ou organique et deshydraté jusqu'à un taux d'extrait sec (résine sèche) généralement compris entre 70 et 90 % environ. On utilise de préférence des résols présentant, à 20°C, une viscosité comprise entre 5 et 100 poises. Pour la préparation des résols, on peut se reporter à l'Encyclopedia of Polymer Science and Technology - Volume 10 Rubrique Phenolic Resins.

On peut utiliser les différents types d'agents d'expansion ou agents porogènes connus dans ce type d'application. Ces agents peuvent appartenir à diverses familles de produits :

- composés à bas point d'ébullition (par exemple de -30 à +80°C) tels que les hydrocarbures de faible masse moléculaire, notamment le n-pentane, des alcools, des éthers, des hydrocarbures partiellement ou totalement halogénés, tels que le chlorure de méthylène, le tétrachlorure de carbone, le chlorofluorométhane, le dichlorure d'éthylène, le trichloro-1,1,2 trifluoro 1,2,2 éthane,

- substances se décomposant en libérant un gaz dans les conditions de mise en oeuvre de la formulation, tels que l'azodicarbonamide, la dinitrosopentaméthylènetétramine, le p.p'-oxy-bis (benzènesulfonylhydrazide), l'azo-bis-2,2'(méthyl-2 propionitrile),

- substances qui réagissent avec le durcisseur acide en libérant un gaz, notamment l'anhydride carbonique : carbonates et bicarbonates de métaux alcalins ou alcalino-terreux notamment les (bi) carbonates de sodium, potassium, ammonium ou calcium. Ces composés solides sont utilisés de préférence sous forme pulvérulente, le diamètre moyen des particules étant compris entre 1 et 20 μ.

D'une manière générale, et dans la mesure où les produits sont compatibles entre eux, on peut utiliser plusieurs produits appartenant à une ou diverses familles mentionnées ci-avant.

La quantité d'agent d'expansion peut représenter, en poids, de 1 à 30 % et de préférence 5 à 20 % du poids du résol défini précédemment. Le choix de la quantité d'agent d'expansion, à l'intérieur des limites mentionnées ci-avant est fonction notamment de la densité souhaitée.

La formation de la mousse et le durcissement de celle-ci s'effectuent, comme indiqué précédemment, en présence d'un catalyseur acide. Ce catalyseur peut être choisi dans une large gamme de produits : il peut s'agir d'un acide minéral (par exemple acide chlorhydrique, acide sulfurique, acide borique, acide phosphorique), d'un acide organique/ minéral, en particulier un acide sulfonique dans lequel le groupement sulfonique est lié à un radical aromatique (par exemple l'acide benzène sulfonique, l'acide phénol sulfonique, l'acide p.toluène sulfonique, l'acide chlorobenzène-3,5 disulfonique, les acides o-, m- et p.crésol sulfoniques, ces acides arylsulfoniques pouvant, éventuellement, être dopés par un diphénol tel que la pyrocatéchine) ou aliphatique (par exemple l'acide butylsulfonique, l'acide propylsulfonique, l'acide hexylsulfonique). Ces divers acides, cités à titre purement indicatif, sont généralement utilisés en solution aqueuse. On peut utiliser un mélange de plusieurs de ces acides, par exemple d'acide p.toluène sulfonique et d'acide sulfurique. Lorsque l'on utilise un catalyseur acide tel que défini ci-avant (acide minéral ou dérivé, acide organique/ minéral), la quantité d'acide (exprimée en acide à 100 %) varie généralement entre 1 et 30 % en poids par rapport au poids de la résine phénolique (résol) décrite précédemment.

On peut également utiliser, en tant que durcisseur acide, des produits de condensation obtenus à partir de phénol, d'acide sulfurique et de formol, dans des rapports molaires acide sulfurique/ phénol, compris entre 0,4 et 0,9 et formol/phénol compris entre 0,1 et 0,8. Ces produits peuvent être préparés selon diverses techniques, la sulfonation et la condensation ayant lieu simultanément ou suivant tout ordre ou en toute proportion choisis à volonté. On peut notamment faire appel aux processus suivants :

- sulfonation du phénol et condensation avec le formaldéhyde du mélange à base d'acide phénol sulfonique, éventuellement ajusté, par addition de phénol à la valeur du rapport molaire $SO_3H$/phénol choisie,

- condensation d'acide phénol sulfonique et de formol et addition audit produit d'une quantité de novolaque pour amener le rapport $SO_3H$/phénol à la valeur choisie,

- condensation du phénol et du formol en novolaque et sulfonation de ladite novolaque, en solution par exemple dans le phénol au degré désiré, ou mélange d'une novolaque sulfonée avec une novolaque non sulfonée pour obtenir statistiquement le taux de sulfonation choisi.

La préparation des produits de condensation/sulfonation mentionnés ci-avant est décrite dans divers documents parmi lesquels on peut citer notamment le brevet français 2.246.588. D'une manière générale, la quantité de durcisseur acide préparé à partir de phénol, formol et acide sulfurique, par exemple suivant les techniques décrites ci-avant, est comprise entre 5 et 100 % en poids par rapport au poids du résol.

Dans la mise en oeuvre du procédé présentement revendiqué, on utilise de préférence en tant que durcisseur des systèmes acide sulfonique/ phénol, soit sous forme de simple mélange acide sulfonique/diphénol, soit sous forme de condensats en faisant intervenir également le formol, ces mélanges et condensats ayant été cités précédemment.

Les compositions utilisables dans le procédé conforme à l'invention ont été définies ci-avant par leurs constituants essentiels, à savoir le résol, l'agent d'expansion et le durcisseur acide. Il est en général souhaitable d'utiliser en outre un agent tensio-actif dans le but notamment de diminuer la tension superficielle de la résine et de favoriser la stabilisation de la croissance des cellules. Cet agent utilisé en général en quantité comprise entre 0,5 et 10 %, et de préférence entre 0,1 et 5 % par rapport au poids du résol, peut être en particulier choisi parmi les produits de condensation d'oxydes d'alkylène et d'alkylphénols, les copolymères polysiloxane/polyoxyalkylène, les mono- esters d'acides gras et d'éthers polyéthyléniques du sorbitol, les glycérides polyoxyéthylénés.

On peut également incorporer dans la composition d'autres additifs parmi lesquels on citera tout particulièrement les agents ignifugeants. Ces produits, qui peuvent être liquides ou solides, sont utilisés généralement en quantité pouvant représenter 5 à 15 % du poids du résol. Ils peuvent être choisis dans une large gamme de produits et on citera notamment les phosphates - tels que les trichloréthylphosphate, trichloropropylphosphate et diphénylcrésyl-phosphate -, les composés du bore - tels que le borax et l'acide borique -, les sulfates tels que le sulfate d'ammonium, l'oxyde d'antimoine, les composés bromés, tels que le dibromopropanol, le tétrabromobisphénol, le bromure de polyvinyle.

Le procédé faisant l'objet de la présente invention comporte les opérations mentionnées précédemment et référencées a), b), c) et d). Ces divers points sont développés ci-après.

La phase mentionnée sous a) comporte en premier lieu la préparation du liquide expansible. Ce mélange comprend les constituants définis précédemment (résol/agent d'expansion/durcisseur/ éventuellement autres additifs). On peut introduire séparément les constituants précités dans un appareil mélangeur. On peut également effectuer des prémélanges, en particulier préparer séparément un mélange (M) résol/agent d'expansion et éventuellement autres additifs et introduire simultanément dans l'appareil mélangeur le mélange (M) et le catalyseur acide. Le mélange est distribué par un ou plusieurs postes fixes ou non, le nombre de postes étant déterminé notamment par la largeur et l'épaisseur de la plaque à fabriquer. La feuille support ($f_1$) peut être constituée par un matériau adhérant ou non à la mousse finale. On choisira l'une ou l'autre possibilité en fonction notamment de l'intention d'associer ou non le support à la mousse dans le panneau final. Le matériau support peut être choisi dans une large gamme de produits par exemple feuilles de papier, de poids généralement compris entre 50 et 500 g/m², mat de verre, articles tissés ou nontissés fabriqués à partir de fibres cellulosiques ou de fibres de polymères synthétiques, pellicules en polymères synthétiques par exemple en polyéthylène, polychlorure de vinyle, polytéréphtalate d'éthylène glycol, pellicules métalliques par exemple des feuilles d'aluminium.

Le mélange mentionné ci-avant est généralement préparé et coulé à une température comprise entre 15 et 50°C.

La phase mentionnée sous b) consiste dans l'application immédiate sur la feuille ($f_1$) d'une seconde ($f_2$). Cette dernière feuille peut être constituée par le même matériau que $f_1$ ou, au contraire, par un matériau différent. Les feuilles $f_1$ et $f_2$ sont disposées et animées d'un mouvement permettant à la fois d'assurer un étalement régulier du liquide expansible et d'en régler l'épaisseur. Les feuilles $f_1$ et $f_2$ sont tirées vers l'extrémité de l'appareil opposée à celle où est déposé le liquide expansible et on peut provoquer le rapprochement progressif de ces feuilles au moyen de tout dispositif approprié. On peut notamment faire passer ces feuilles $f_1$ et $f_2$ dans un ensemble mécanique constitué par deux surfaces fixes par exemple métallique ou en verre, convenablement profilées, situées dans des plans sécants. D'une manière générale, la distance entre les arêtes les plus rapprochées de ces surfaces convergentes représente de 1 à 10 % de l'épaisseur finale de la plaque de mousse.

La phase mentionnée sous c) est relative à la confection d'une gaine étanche. La notion de gaine étanche s'applique toujours au liquide expansible et au matériau cellulaire en cours de formation ou formé. Elle peut en plus s'appliquer aux gaz formés et libérés au cours de l'examen. Lorsque l'on utilise comme feuille support ($f_1$ et/ou $f_2$) un matériau ne possédant en lui-même l'étanchéité requise (tissu par exemple), il convient d'associer ce matériau à un matériau complémentaire assurant ladite étanchéité (divers types de matériaux ont été cités précédemment). On peut réaliser la gaine précitée en utilisant diverses techniques : on peut utiliser deux feuilles séparées ($f_1$ et $f_2$) ou utiliser une seule feuille que l'on replie sur elle-même et que l'on assemble sur un seul côté. Quant à la technique d'assemblage, elle est en soi connue (collage avec emploi de colle à prise rapide à froid ou à chaud, thermocollage, soudure, sertissage, emploi de bande adhésive) : le choix de la technique d'assemblage appartient à l'homme de l'art, compte tenu notamment des matériaux choisis pour constituer la gaine.

La dernière phase du procédé conforme à l'invention consiste à entraîner la gaine plate renfermant le liquide expansible, régulièrement réparti, dans un dispositif conformateur, cet entraînement étant effectué dans des conditions permettant l'expansion du liquide et le durcissement de la mousse. L'expression "durcissement de la mousse" est utilisée présentement pour signifier que la structure cellulaire est suffisamment figée pour permettre, à la sortie du conformateur, les manipulations ou découpages usuels sans déformation ou dégradation sensible de la plaque. D'une manière générale, la zone d'expansion du dispositif conformateur est à une température comprise entre la température ambiante – environ 20°C – et 80°C, l'élévation de la température accélérant le processus d'expansion.

La gaine renfermant le matériau expansé passe en général ensuite entre des surfaces parallèles au plan de la feuille support $(f_1)$, lesdites surfaces étant portées à une température permettant de compléter si nécessaire l'expansion et de durcir la mousse (poursuite des réactions de polycondensation/réticulation de la résine phénolique). La température est généralement comprise entre 50 et 80°, et la durée du séjour à cette température est de l'ordre de quelques minutes.

Le procédé conforme à l'invention, défini ci-avant dans ses éléments essentiels, et qui peut faire l'objet de variantes, tant en ce qui concerne l'appareillage utilisé que les conditions opératoires, permet d'obtenir des plaques en mousses phénoliques présentant notamment une remarque régularité des cellules sur toute la section de la plaque. A titre purement indicatif, on mentionnera le fait que ce procédé permet d'obtenir des plaques dont l'épaisseur peut aller jusqu'à 100 mm et dont la densité peut aller de 0,10 à des valeurs aussi faibles que 0,020, tout en possédant des propriétés mécaniques satisfaisantes.

S'agissant de l'appareillage, on pourra avantageusement utiliser les dispositifs tels que décrits dans les brevets français 1.525.046, 1.550.293 et 2.085.391.

Les plaques fabriquées conformément au procédé de l'invention peuvent être utilisées dans des industries diverses (bâtiment, industrie du froid, isolation thermique ou acoustique, emballage) du fait d'un ensemble de propriétés avantageuses : légèreté, solidité, imputrescibilité, incombustibilité.

Dans les exemples qui suivent, on indique à titre purement illustratif des conditions de mise en oeuvre du procédé conforme à l'invention.

EXEMPLE 1 :

1°/ On utilise les produits suivants :

a Résol formophénolique préparé avec un rapport molaire formol/phénol de 1,6. La condensation est effectuée à 80/85°C en utilisant la soude en tant que catalyseur. Le résol est neutralisé au moyen d'acide chlorhydrique. Il présente à 20°C une viscosité de 1600 cPo pour une teneur en eau de 10 % environ.

b Tensio-actif : alkylphénolpolyoxyéthylé : ce produit est incorporé dans le résol à raison de 1 % (en poids).

c Catalyseur acide : novolaque (masse moléculaire moyenne 1000 ; rapport molaire formol/phénol 0,77) en solution dans le phénol, sulfonée au moyen d'acide sulfurique à 98 %.

d Agent d'expansion : trifluorotrichloro-éthane.

2°/ On introduit dans un dispositif de coulée comportant une tête de mélange à fort cisaillement :

- Constituant A : une dispersion de 15 parties de l'agent d'expansion 1d dans 100 parties du résol 1a renfermant le tensio-actif 1b. La dispersion est effectuée au moyen d'une turbine défloculante.

- Constituant B : catalyseur acide 1c.

3°/ Fabrication de la plaque :

A partir de la tête de mélange alimentée par les deux constituants A et B, le mélange réactif est coulé en continu sur une bande de papier. Le papier reçoit symétriquement par rapport à la coulée deux filets de colle hot-melt. Une autre bande de papier déroulée à la même vitesse que le papier inférieur, est appliquée sur le papier inférieur. Un jeu de galets presseurs assure l'assemblage des deux papiers au niveau des filets de colle pour former une gaine étanche. Le rapprochement progressif des deux faces de la

gaîne entraîne l'étalement du mélange réactif suivant une épaisseur régulière.

La gaîne plate de papier contenant la veine de mélange réactif s'engage dans un dispositif conformateur comprenant la zone dite d'expansion où la mousse commence et développe son expansion, et un double convoyeur comportant deux tapis réglables en température. Entre les faces parallèles et internes du convoyeur la composition termine son expansion et poursuit sa polymérisation.

4°/ Modalités opératoires :
- Débit du constituant A dans le dispositif de coulée ... 2075 g/mn
- Débit du constituant B ............................... 325 g/mn
- Débit global du mélange réactif (A + B) ............. 2400 g/mn
- Température du mélange lors de la coulée ............. 34 °C
- Papier : 200 g/m² ; épaisseur 0,4 mm ; largeur 50 cm
- Colle : colle type "hot-melt" à base de polyéthylène
- Largeur de la gaîne avant expansion .................. 44 cm
- Vitesse d'avancement du papier ...................... 3,30 m/mn
- Température de la zone d'expansion et du convoyeur .... 60 °C

5°/ Résultats :

On fabrique en continu une plaque de 33 mm d'épaisseur et 40 cm de largeur. La densité est de 0,047. La résistance en compression est de 2,6 kg/cm². Ces plaques sont remarquables du fait de la régularité des cellules sur toute la section.

EXEMPLE 2 :

On renouvelle l'essai de l'exemple 1 avec les modifications suivantes :
1°/ 1b : Tensio-actif : copolymère polysiloxane/polyoxyalkylène (1 % par rapport au résol).
2°/ : Constituant A :
12 parties d'agent d'expansion (au lieu de 15).
4°/ : Vitesse d'avancement du papier ............. 3,24 m/mn
5°/ : Résultats :
Epaisseur .................................. 47 mm

Densité ................................. 0,030

Résistance en compression ................ 1,5 kg/cm$^2$

EXEMPLE 3 :

On renouvelle l'essai de l'exemple 1 avec les modifications suivantes :

1°/ <u>1d</u> : Agent d'expansion : n-pentane

2°/ : Constituant A : 5 parties d'agent d'expansion (au lieu de 15).

4°/ : Modalités opératoires :

Débit du constituant A .................... 2340 g/mn

Débit du constituant B ................... 360 g/mn

Débit global ........................... 2700 g/mn

Vitesse d'avancement du papier .......... 3,70 m/mn

5°/ : Résultats :

Epaisseur ................................ 41 mm

Densité ................................. 0,32

Résistance en compression ............... 1,6 kg/cm$^2$

EXEMPLE 4 :

On renouvelle l'essai de l'exemple 1 avec les modifications suivantes :

1°/ <u>1c</u> : Catalyseur acide : mélange acide paratoluène sulfonique (100 parties)/pyrocatéchine (10 parties)/alcool polyvinylique (2 parties).

4°/ : Vitesse d'avancement du papier ........... 3,13 m/mn

5°/ : Résultats :

Epaisseur ................................ 37 mm

Densité ................................. 0,037

Résistance en compression ............... 2 kg/cm$^2$

EXEMPLE 5 :

On renouvelle l'essai de l'exemple 1 avec les modifications suivantes :

1°/ <u>1e</u> : Ignifugeant : composé chlorophosphaté (10 parties pour 100 parties de résol).

2°/ : Constituant A : dispersion de 15 parties de l'agent d'ex_ pansion *1d* dans 100 parties du mélange de résol *1a* avec le tensio-actif *1b* et l'ignifugeant *1e* aux taux indiqués.

5°/ : Résultats :

Epaisseur ...................................... 40 mm

Densité ....................................... 0,035

Résistance en compression ................ 1,9 kg/cm$^2$

Comportement au feu :

    - classement B1 (DIN 4102)

    - classement M1 (NFP 92501)

Absence de post incandescence lors des tests effectués selon les normes précitées.

14

REVENDICATIONS

1./ Procédé de fabrication en continu de plaques en mousse phénolique, caractérisé en ce qu'il comprend les opérations suivantes :

a) Coulée sur une feuille support ($f_1$) à partir d'un ou plusieurs organes distributeurs, d'un mélange comprenant un polycondensat aldéhyde-phénol du type résol, un agent d'expansion et un durcisseur acide.

b) Application immédiate sur ledit liquide d'une seconde feuille ($f_2$) de manière à provoquer l'étalement uniforme du liquide sur une épaisseur prédéterminée.

c) Simultanément à l'opération décrite sous b), assemblage des bords des feuilles $f_1$ et $f_2$ de manière à former une gaine étanche.

d) Entraînement de l'ensemble à travers un dispositif conformateur, dans des conditions permettant l'expansion du liquide et le durcissement de la mousse.

2./ Procédé selon la revendication 1, caractérisé en ce que lors de l'opération de coulée mentionnée sous a) la température du mélange expansible est comprise entre 15 et 50°C.

3./ Procédé selon l'une quelconque des revendications 1 et 2, caractérisé en ce que le dispositif conformateur comporte une zone d'expansion proprement dite dont la température est comprise entre la température ambiante et 80°C.

4./ Procédé selon l'une quelconque des revendications 1 à 3, caractérisé en ce que, dans le dispositif conformateur, la zone d'expansion est suivie d'une zone dans laquelle le matériau expansé, se déplace entre des surfaces parallèles au plan de la feuille support ($f_1$), lesdites surfaces étant portées à une température comprise entre 50 et 80°.

5./ Procédé selon l'une quelconque des revendications 1 à 4, caractérisé en ce que la gaine mentionnée sous c est étanche au liquide expansible, au matériau en cours d'expansion et au matériau expansé.

6./ Procédé selon la revendication 5, caractérisé en ce que la gaine est également étanche aux gaz formés et libérés lors de l'expansion.

7./ Procédé selon l'une quelconque des revendications 1 à 6, caractérisé en ce que les feuilles $f_1$ et $f_2$ mentionnées sous a) et b) sont constituées par des matériaux adhérant ou non à la mousse et choisis notamment dans le groupe constitué par les feuilles de papier, de mat de verre, les articles tissés ou nontissés à base de fibres cellulosiques ou de fibres de polymères synthétiques, les pellicules en polymères synthétiques et les pellicules métalliques.

8./ Procédé selon l'une quelconque des revendications 1 à 7, caractérisé en ce que l'assemblage des bords des feuilles, mentionné sous c), est réalisé par collage.

9./ Procédé selon l'une quelconque des revendications 1 à 8, caractérisé en ce que l'agent d'expansion est un hydrocarbure éventuellement halogéné.

10./ Procédé selon l'une quelconque des revendications 1 à 9, caractérisé en ce que le durcisseur acide est choisi parmi les produits obtenus à partir de phénol, d'acide sulfurique et de formol, dans des rapports molaires acide sulfurique/phénol compris entre 0,4 et 0,9 et formol/phénol compris entre 0,1 et 0,8.

11./ Procédé selon l'une quelconque des revendications 1 à 9, caractérisé en ce que le durcisseur acide est un mélange acide arylsulfonique/diphénol.

12./ Procédé selon l'une quelconque des revendications 1 à 11, caractérisé en ce que le mélange expansible mentionné sous a) renferme un agent tensio-actif, à raison de 0,5 à 10 % en poids par rapport au résol.

13./ Procédé selon l'une quelconque des revendications 1 à 12, caractérisé en ce que le polycondensat est un résol formaldéhyde/ phénol, présentant à 20°C une viscosité comprise entre 5 et 100 poises.

14./ Procédé selon l'une quelconque des revendications 1 à 13, caractérisé en ce que le mélange expansible comprend un agent ignifugeant à raison de 5 à 15 % par rapport au poids du résol.

15./ Plaques en mousses phénoliques telles qu'obtenues par mise en oeuvre du procédé décrit dans l'une quelconque des revendications 1 à 14.

Office européen
des brevets

**RAPPORT DE RECHERCHE EUROPEENNE**

EP 80 40 1506

| | **DOCUMENTS CONSIDERES COMME PERTINENTS** | | | CLASSEMENT DE LA DEMANDE (Int. Cl. ³) |
|---|---|---|---|---|
| Catégorie | Citation du document avec Indication, en cas de besoin, des parties pertinentes | | Revendication concernée | |
| D | <u>FR - A - 2 128 424</u> (DYNAMIT NOBEL)<br>  * Page 9, ligne 28 - page 10, ligne 5; revendication 6 *<br><br>             -- <br><br><u>FR - A - 1 525 046</u> (RHONE-POULENC)<br>  * Page 3, colonne de gauche, dernier alinéa - colonne de droite, ligne 3 *<br><br>            ---- | | 1<br><br><br><br><br>1 | B 29 D 27/00 |

**DOMAINES TECHNIQUES RECHERCHES (Int. Cl. ³)**

B 29 D 27/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 10-02-1981 | KUSARDY |

OEB Form 1503.1  06.78